# EUROPEAN PATENT APPLICATION

(11) **EP 4 311 374 A1**
(43) Date of publication of application: **24.01.2024**
(21) Application number: 21931533.0
(22) Date of filing: 17.03.2021
(51) Int. Cl.: H04W 92/20

(54) **WIRELESS BASE STATION**

(71) Applicant: NTT DOCOMO, INC., Tokyo 100-6150 (JP)
(72) Inventor: MIN Tianyang, Tokyo 100-6150 (JP); HOSHIZAKI Yuya, Tokyo 100-6150 (JP); TANIGUCHI Masato, Tokyo 100-6150 (JP); YAMADA Tarou, Tokyo 100-6150 (JP); SAWAMUKAI Shinsuke, Tokyo 100-6150 (JP)
(74) Representative: Hoffmann Eitle
(86) International application number: PCT/JP2021/010919
(87) International publication number: WO 2022/195782

(57) **Abstract**

A radio base station receives a configuration indication of a radio resource control layer. The radio base station assumes that the configuration indication is a configuration indication in a radio resource control layer of a secondary cell group if the configuration indication is included in a specific inter-node message.

## Description

### Technical Field

The present disclosure relates to a radio base station that supports a procedure for changing a secondary cell (a secondary node).

### Background Art

The 3rd Generation Partnership Project (3GPP) has prepared a specification for the 5th generation mobile communication system (also referred to as 5G, New Radio (NR), or Next Generation (NG)), and further a specification for a next-generation system referred to as Beyond 5G, 5G Evolution, or 6G is also being prepared.

In 3GPP Release-15, in a procedure of changing a secondary node (SN) in E-UTRA-NR Dual Connectivity (EN-DC) (SN Change - MN initiated), if a target secondary node (T-SN) configures a radio resource control layer (RRC), the target secondary node can transmit to a master node (MN) an inter-node message (SgNB Addition Request Acknowledge), in which a configuration indication (RRC config indication) is configured to full configuration (full config.) (Non-Patent Literature 1).

Based on the RRC config indication (full config.), a radio base station constituting the MN releases and adds a configuration for a secondary cell group (SCG) to a terminal (User Equipment, UE).

Also added is an operation that allows the SN to transmit to the MN an inter-node message (SgNB Modification Required/SgNB Modification Request Acknowledge) in which the RRC config indication is configured to full config., if a target Distributed Unit (DU) triggers full configuration (full config.) in a procedure for changing the SN in the EN-DC (SN Modification procedure - SN initiated with MN involvement).

### Citation List

### Non-Patent Literature

Non-Patent Literature 1: 3GPP TS 37.340 V15.11.0, 3rd Generation Partnership Project; Technical Specification Group Radio Access Network; Evolved Universal Terrestrial Radio Access (E-UTRA) and NR; Multi-connectivity; Stage 2 (Release 15), 3GPP, December 2020

### Summary of the Invention

As described above, an RRC config indication (full config.) is used in two types of SN change procedures, but the case where the RRC config indication means the RRC configuration of the SCG and the case where the RRC config indication means the RRC configuration of the SCG and the radio bearer are mixed. For this reason, the radio base station (MN) may not be able to configure an appropriate RRC even when notified of the RRC config indication.

Therefore, the following disclosure has been made in view of this kind of situation and an object of the disclosure is to provide a radio base station that can implement an appropriate configuration according to a configuration indication in a radio resource control layer.

One aspect of the present disclosure provides a radio base station (for example, eNB 100A) including: a receiving unit (RRC processing unit 120) that receives a configuration indication of a radio resource control layer; and a control unit (control unit 140) that assumes that the configuration indication is a configuration indication in a radio resource control layer of a secondary cell group if the configuration indication is included in a specific inter-node message.

One aspect of the present disclosure provides a radio base station (for example, eNB 100A) including: a receiving unit (RRC processing unit 120) that receives a configuration indication of a radio resource control layer; and a control unit (control unit 140) that assumes that the configuration indication is a configuration indication in a radio resource control layer of a secondary cell group and a radio bearer if the configuration indication is included in a specific inter-node message.

One aspect of the present disclosure provides a radio base station (for example, eNB 100A) including: a receiving unit (RRC processing unit 120) that receives a configuration indication of a radio resource control layer; and a control unit (control unit 140) that assumes that the configuration indication is a configuration indication in a radio resource control layer of a secondary cell group and a radio bearer if the configuration indication is included in a first inter-node message, and assumes that the configuration indication is a configuration indication in a radio resource control layer of a secondary cell group if the configuration indication is included in a second inter-node message.

### Brief Description of Drawings

[Fig. 1] Fig. 1 is an overall schematic configuration diagram of a radio communication system 10.
[Fig. 2] Fig. 2 is a functional block diagram of an eNB 100A.
[Fig. 3] Fig. 3 is a functional block diagram of a UE 200.
[Fig. 4] Fig. 4 is a diagram showing a sequence example of MN-initiated inter-SN SCG change.
[Fig. 5] Fig. 5 is a diagram showing a sequence example of an SN modification procedure - SN initiated with MN involvement.
[Fig. 6] Fig. 6 is a diagram showing an example of the content of a specific action of an MN according to Operation Example 2.
[Fig. 7] Fig. 7 is a diagram showing an example of the specification of an SgNB Addition Request Acknowledge.
[Fig. 8] Fig. 8 is a diagram showing an example of the specification of SgNB Modification Request Acknowledge.
[Fig. 9] Fig. 9 is a diagram showing an example of the specification of an RRC config indication.
[Fig. 10] Fig. 10 is a diagram showing an example of a hardware configuration of the eNB 100A, a gNB 100B, and the UE 200.

### Description of Embodiments

Embodiments will be described below with reference to the accompanying drawings. Note that the same or similar reference numerals have been attached to the same functions and configurations, and the description thereof is omitted as appropriate.

### (1) Overall schematic configuration of radio communication system

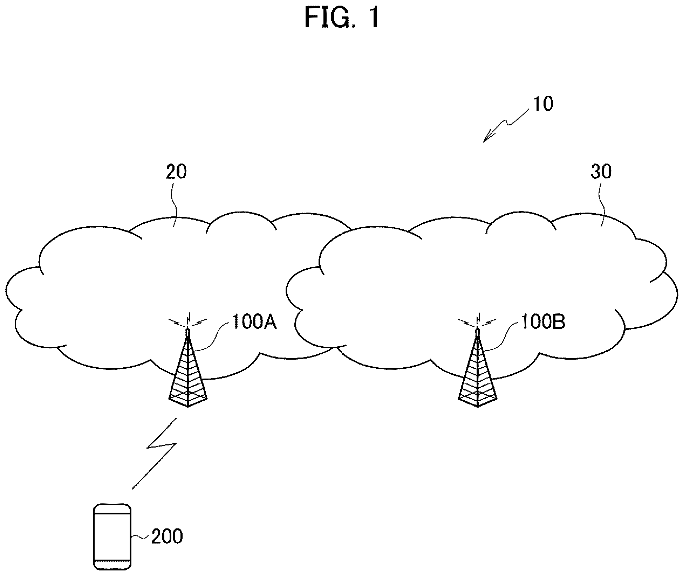

Fig. 1 is an overall schematic configuration diagram of a radio communication system 10 according to the present embodiment. The radio communication system 10 is compliant with Long Term Evolution (LTE) and 5G New Radio (NR). LTE may be referred to as 4G and NR may be referred to as 5G. Further, the radio communication system 10 may be compliant with a method referred to as Beyond 5G, 5G Evolution, or 6G.

LTE and NR may be interpreted as radio access technology (RAT), and in the present embodiment, LTE may be referred to as first radio access technology and NR may be referred to as second radio access technology.

The radio communication system 10 includes an Evolved Universal Terrestrial Radio Access Network 20 (hereinafter referred to as "E-UTRAN 20") and a Next Generation-Radio Access Network 30 (hereinafter referred to as "NG RAN 30"). Further, the radio communication system 10 includes a terminal 200 (hereinafter referred to as "UE 200", user equipment).

The E-UTRAN 20 includes an eNB 100A, which is a radio base station that is compliant with LTE. The NG RAN 30 includes a gNB 100B, which is a radio base station that is compliant with 5G (NR). The E-UTRAN 20 may include a Mobility Management Entity (MME) and Serving Gateway (S-GW). Further, the NG RAN 30 may be connected to a User Plane Function (not shown) that is included in the system architecture of 5G and that provides user plane functions. The E-UTRAN 20 and NG RAN 30 (may be the eNB 100A or gNB 100B) may simply be referred to as a network.

The eNB 100A, gNB 100B, and UE 200 can support Carrier Aggregation (CA) using a plurality of Component Carriers (CCs) and dual connectivity for transmitting component carriers simultaneously between a plurality of NG-RAN Nodes and the UE.

The eNB 100A, gNB 100B, and UE 200 perform radio communication via a radio bearer, specifically a Signaling Radio Bearer (SRB) or DRB Data Radio Bearer (DRB).

In the present embodiment, Multi-Radio Dual Connectivity (MR-DC) may be performed in which the eNB 100A constitutes a master node (MN) and the gNB 100B constitutes a secondary node (SN), specifically E-UTRA-NR Dual Connectivity (EN-DC), or NR-E-UTRA Dual Connectivity (NE-DC) may be performed in which the gNB 100B constitutes the MN and the eNB 100A constitutes the SN. Alternatively, NR-NR Dual Connectivity (NR-DC) may be performed in which the gNBs constitute the MN and SN.

In this way, the UE 200 supports dual connectivity with the eNB 100A and gNB 100B.

The eNB 100A is included in a master cell group (MCG) and the gNB 100B is included in a secondary cell group (SCG). That is, the gNB 100B is an SN included in the SCG. An SN may be distinguished between a source SN (S-SN), which is an adding/changing source SN, and a target SN (T-SN), which is an adding/changing destination SN.

The eNB 100A and gNB 100B may be referred to as radio base stations or network devices. Further, the eNB 100A and gNB 100B may include a Central Unit (CU) and a Distributed Unit (DU). A plurality of DUs may be connected to the CU, and the DU may have the functions of a radio physical layer such as an antenna port.

Further, in the radio communication system 10, conditional addition/change of the Primary SCell (PSCell) (conditional PSCell addition/change) may be supported. The PSCell is a type of a secondary cell. The PSCell means Primary SCell (secondary cell) and may be interpreted as corresponding to any one of a plurality of SCells.

The secondary cell may be read as a secondary node (SN) or a secondary cell group (SCG). By means of the conditional PSCell addition/change, it is possible to realize efficient and rapid addition or change of a secondary cell.

The conditional PSCell addition/change may be interpreted as a conditional secondary cell addition/change procedure with a simplified procedure. The conditional PSCell addition/change may mean at least either an SCell addition or an SCell change.

Further, in the radio communication system 10, a conditional inter-SN PSCell change procedure may be supported. Specifically, at least one of an MN-initiated inter-SN SCG change initiated by an MN, an SN-initiated inter-SN SCG change initiated by an SN, or an SN Modification procedure may be supported. In addition, a PSCell change in an SN (intra-SN PSCell change) may be supported.

Further, in the radio communication system 10, with respect to the configuration of a radio resource control layer (RRC), full configuration in which almost all configurations are performed (full config.) and partial configuration in which some configurations are performed (delta config.) may be specified.

In the full config., all dedicated radio configurations in the configurations may be released/cleared except for the configurations of the MCG's C (Cell)-RNTI and the Access Stratum (AS) security associated with a master key.

### (2) Functional block configuration of radio communication system

Next, a functional block configuration of the radio communication system 10 will be described. Specifically, the functional block configuration of the eNB 100A and the UE 200 will be described.

### (2.1) eNB 100A

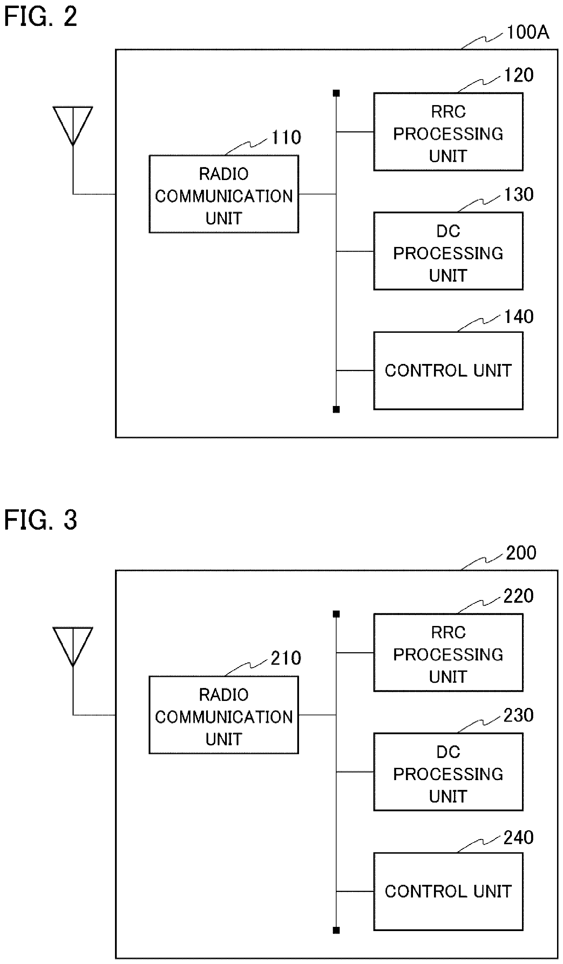

Fig. 2 is a functional block diagram of the eNB 100A. As shown in Fig. 2, the eNB 100A includes a radio communication unit 110, an RRC processing unit 120, a DC processing unit 130, and a control unit 140. The gNB 100B may have the same function as the eNB 100A, although there is a difference in that the gNB 100B supports NR.

The radio communication unit 110 transmits a downlink signal (DL signal) that is compliant with LTE. Further, the radio communication unit 110 receives an uplink signal (UL signal) that is compliant with LTE.

The RRC processing unit 120 performs various processes in the radio resource control layer (RRC). Specifically, the RRC processing unit 120 can transmit the RRC Reconfiguration to the UE 200. Further, the RRC processing unit 120 can receive from the UE 200 an RRC Reconfiguration Complete, which is a response to the RRC Reconfiguration.

The eNB 100A supports LTE in the present embodiment, but in this case, the name of the RRC message may be RRC Connection Reconfiguration or RRC Connection Reconfiguration Complete.

Further, the RRC processing unit 120 may perform processing of an inter-node message with the gNB 100B. For example, in the procedure of an MN-initiated SN change (3GPP TS37.340, chapter 10.5.1), the RRC processing unit 120 can transmit an SgNB Modification Request to the gNB 100B (in the case of T-SN) and receive from the gNB 100B an SgNB Addition Request Acknowledge, which is a response to the SgNB Modification Request.

Further, the RRC processing unit 120 can transmit an SgNB Release Request to the gNB 100B (in the case of S-SN) and receive from the gNB 100B an SgNB Release RequestAcknowledge, which is a response to the SgNB Release Request.

In addition, in the procedure of an SN Modification procedure - SN initiated with MN involvement (3GPP TS37.340, chapter 10.3.1), the RRC processing unit 120 can receive an SgNB Modification Required from the gNB 100B and transmit an SgNB Modification Confirm to the gNB 100B.

Further, for the provision of a forwarding address and/or a security key of an SgNB, the RRC processing unit 120 can transmit an SgNB Modification Request to the gNB 100B and receive from the gNB 100B an SgNB Modification Request Acknowledge, which is a response to the SgNB Modification Request.

In the present embodiment, the inter-node message may be interpreted as a message associated with a request to add or change the SN (conditional PSCell addition/change or the like may be included).

Further, the RRC processing unit 120 can receive the configuration indication of the RRC. In the present embodiment, the RRC processing unit 120 may constitute a receiving unit. Specifically, the RRC processing unit 120 can receive the RRC config indication. The RRC config indication may be included in the inter-node message described above as an information element (IE).

For example, the RRC config indication may be included in the SgNB Addition Request Acknowledge, SgNB Modification Required, or SgNB Modification Request Acknowledge. However, the RRC config indication may be included in another inter-node messages transmitted from the SN, for example.

The RRC config indication may be interpreted as an indication of the RRC configuration. The RRC config indication may indicate the type of full config. or delta config. as described above, and may include the RRC configuration for the SCG, SN, or SgNB.

The DC processing unit 130 performs processing related to dual connectivity, specifically, Multi-RAT Dual Connectivity (MR-DC). In the present embodiment, the eNB 100A supports LTE and the gNB 100B supports NR, and therefore the DC processing unit 130 may perform processing related to E-UTRA-NR Dual Connectivity (EN-DC). The type of DC is not limited as described above, and for example, NR-E-UTRA Dual Connectivity (NE-DC) or NR-NR Dual Connectivity (NR-DC) may be supported.

The DC processing unit 130 transmits and receives messages specified in 3GPP TS37.340 or the like, and can perform processing related to configuration and releasing DCs among the eNB 100A, gNB 100B, and UE 200.

The control unit 140 controls each functional block constituting the eNB 100A. In particular, in the present embodiment, the control unit 140 performs control regarding the addition or change of a secondary node.

Specifically, the control unit 140 may assume that the configuration indication of the RRC (RRC config indication) is the configuration indication in the RRC of the SCG if the configuration indication is included in a specific inter-node message.

The specific inter-node message may mean the SgNB Addition Request Acknowledge, SgNB Modification Required, or SgNB Modification Request Acknowledge. The configuration indication in the RRC of the SCG may mean RRC configuration of SCG config.

Alternatively, if the configuration indication of the RRC (RRC config indication) is included in a specific inter-node message (SgNB Addition Request Acknowledge, SgNB Modification Required, or SgNB Modification Request Acknowledge), the control unit 140 may assume that the configuration indication is the configuration indication in the RRC of the SCG and radio bearer. The configuration indication in the RRC of the SCG and radio bearer may mean the RRC configuration of both the SCG config and radio bearer config.

Alternatively, the control unit 140 may assume that the RRC config indication is a configuration indication in a radio resource control layer of the SCG and radio bearer if the RRC config indication is included in a first inter-node message. The control unit 140 may also assume that the RRC config indication is a configuration indication in the RRC of the SCG if the RRC config indication is included in a second inter-node message.

The first inter-node message may be, for example, an SgNB Addition Request Acknowledge. The second inter-node message may be an SgNB Modification Request Acknowledge or SgNB Modification Required.

The control unit 140 may release the radio bearer terminated to the SN and provide security information to the SN, based on the type of inter-node message that includes the RRC config indication.

Specifically, if the control unit 140 receives an SgNB Modification Request Acknowledge or SgNB Modification Required, the control unit 140 may release the DRB terminated to the SN and provide updated security information (specifically, a security key (S-KgNB)) to the SN.

Alternatively, the control unit 140 may perform, based on the type of inter-node message that includes the RRC config indication, non-generation of the radio bearer's release list, or recovery of a packet data convergence protocol layer (PDCP) of the radio bearer terminated to the radio base station (eNB 100A).

Specifically, as described above, suppose that the control unit 140 assumes that the RRC config indication is a configuration indication in the radio resource control layer of the SCG and the radio bearer if the RRC config indication is included in the SgNB Addition Request Acknowledge (first inter-node message), and that the control unit 140 assumes that the RRC config indication is a configuration indication in the RRC of the SCG if the RRC config indication is included in the SgNB Modification Request Acknowledge or SgNB Modification Required (second inter-node message), the control unit 140 may perform non-generation of the radio bearer's release list or recovery of the PDCP of the radio bearer.

In addition, the control unit 140 may perform non-generation of the radio bearer's release list or recovery of the PDCP of the radio bearer according to the content of the PDCP change indication specified in the X2-AP. The content of the PDCP change indication may include, for example, (i) information that the PDCP change indication is not included in the inter-node message, (ii) the PDCP data recovery, or (iii) information that the security key (S-KgNB) needs to be updated.

The non-generation of the radio bearer's release list may mean no generation of drb-to-ReleaseList. Further, the recovery of the PDCP of the radio bearer may mean PDCP recovery of MN terminated DRBs.

### (2.2) UE 200

Fig. 3 is a functional block diagram of the UE 200. As shown in Fig. 3, the UE 200 includes a radio communication unit 210, an RRC processing unit 220, a DC processing unit 230, and a control unit 240.

The radio communication unit 210 transmits an uplink signal (UL signal) that is compliant with LTE or NR. Further, the radio communication unit 210 receives a downlink signal (DL signal) that is compliant with LTE or NR. That is, the UE 200 can access the eNB 100A (E-UTRAN 20) and gNB 100B (NG RAN 30) and can support dual connectivity (specifically, EN-DC).

The RRC processing unit 220 performs various processes in the radio resource control layer (RRC). Specifically, the RRC processing unit 220 can transmit and receive messages in the radio resource control layer.

The RRC processing unit 220 can receive an RRC Reconfiguration from the network, specifically, from the E-UTRAN 20 (or NG RAN 30). Further, the RRC processing unit 220 can transmit to the network an RRC Reconfiguration Complete, which is a response to RRC Reconfiguration.

The DC processing unit 230 performs processing related to dual connectivity, specifically, processing related to MR-DC. As described above, in the present embodiment, the DC processing unit 230 may perform processing related to EN-DC, but may also support NE-DC and/or NR-DC.

The DC processing unit 230 can access both the eNB 100A and gNB 100B, and perform configurations in a plurality of layers including the RRC (the medium access control layer (MAC), radio link control layer (RLC), packet data convergence protocol layer (PDCP), and the like).

The control unit 240 controls each functional block constituting the UE 200. In particular, in the present embodiment, the control unit 240 performs control regarding addition or change of the SN and control regarding configuration of the RRC.

Specifically, the control unit 240 may add or change the SN based on an RRC message transmitted from the eNB 100A (MN) or the gNB 100B (SN). The control unit 240 may also perform various configurations of the RRC based on the RRC message. The RRC configuration may include the full config. or delta config. as described above.

### (3) Operation of radio communication system

Next, the operation of the radio communication system 10 will be described. Specifically, a description will be given regarding the operation of the radio communication system 10 regarding the configuration indication of RRC (RRC config indication).

### (3.1) Conventional operation examples and issues

In the (NG)EN-DC inter SN SCG change specified in 3GPP Release-15, full config. can be designated as the RRC config indication.

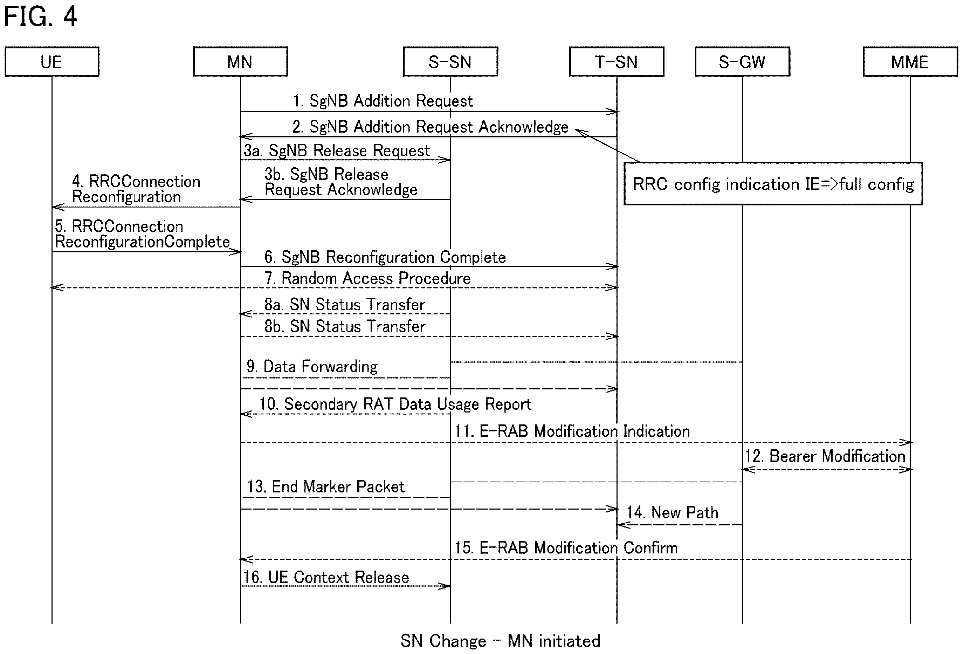

Fig. 4 shows a sequence example of an MN-initiated inter-SN SCG change. As shown in Fig. 4, in an MN-initiated SCG (SN) change (3GPP TS37.340, chapter 10.5.1), if the T-SN (for example, gNB 100B) triggers full config., the RRC config indication included in the SgNB Addition Request Acknowledge may be configured to full config.

Based on the received full config. instruction, the MN (for example, eNB 100A) instructs the UE 200 to release and add the RRC configuration for the SCG (specifically, setting Endc-ReleaseAndAdd, which is the IE of the RRC, to be on). The MN then releases the radio bearer, specifically, SN terminated DRB, that is, the MN generates a DRB-ToReleaseList.

In the (NG)EN-DC Intra-CU inter DU SCG change/Intra-SN PSCell change specified in 3GPP Release-15 also, full config. can be designated as an RRC config indication.

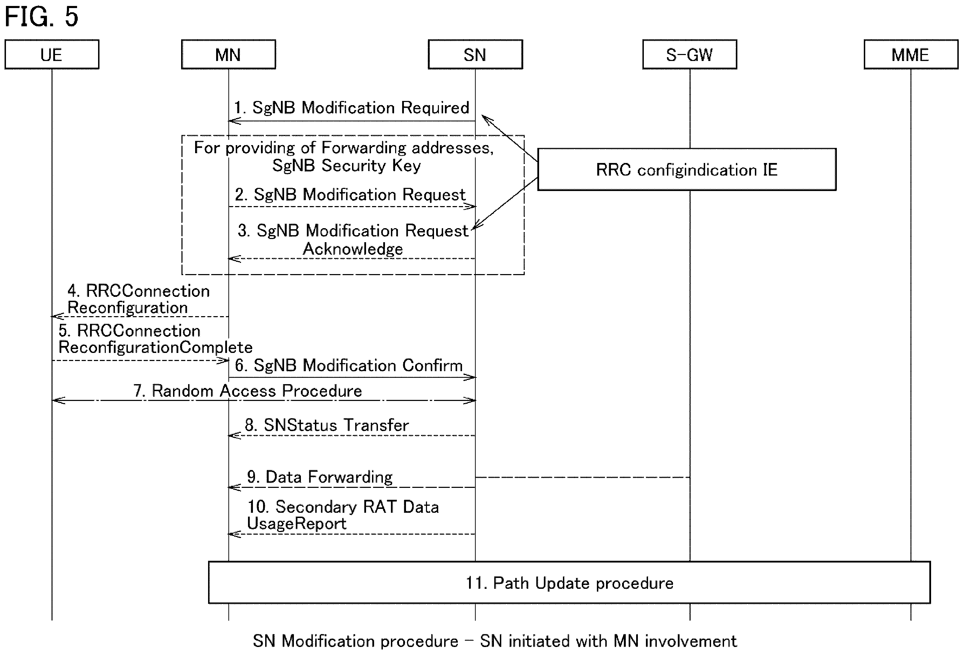

Fig. 5 shows a sequence example of an SN Modification procedure - SN initiated with MN involvement. As shown in Fig. 5, it is additionally specified that an RRC config indication included in an SgNB Modification Required or SgNB Modification Request Acknowledge may be configured to full config., if a target DU (SN) triggers a full config.

Specifically, it is specified in 3GPP TS36.423, chapter 8.7.7.2 that an (en-)gNB notifies an MeNB (MN) by including the IE of the RRC config indication in the SgNB Modification Request Acknowledge, and the (en-)gNB notifies the MeNB (MN) by including the IE of the RRC config indication in the SgNB Modification Required.

### (3.2) Operation Example 1

However, the operation in accordance with the above specification is considered to have the following problems.

- (Issue 1): In the (NG)EN-DC Intra-CU inter DU SCG change/Intra-SN PSCell change, the SgNB Modification Required or SgNB Modification Request Acknowledge is transmitted from the SN to the MN, but it is unclear which of the following meanings the RRC config indication included in the inter-node message has.

- (Option 1): RRC configuration of SCG config
- (Option 2): RRC configuration of both SCG config and radio bearer config
- (Issue 2): An RRC config indication included in an SgNB Addition Request Acknowledge has the meaning of Option 2, whereas an RRC config indication included in an SgNB Modification Required or SgNB Modification Request Acknowledge can have the meaning of Option 1. For this reason, even though they are the same RRC config indication, there are two interpretations for the same RRC config indication, and this may interfere with proper operation.

Therefore, the radio communication system 10 (MN and SN) may follow any one of the following operation examples 1-1 to 1-3 regarding the handling of the RRC config indication included in the following inter-node messages.

- (Target inter-node messages):
- SgNB Addition Request Acknowledge
- SgNB Modification Request Acknowledge
- SgNB Modification Required
- (Operation Example 1-1): An RRC config indication (full config.) is interpreted as having the meaning of Option 1 above.

- (Operation Example 1-2): An RRC config indication (full config.) is interpreted as having the meaning of Option 2 above.

- (Operation Example 1-3): An RRC config indication (full config.) included in an SgNB Addition Request Acknowledge is interpreted as having the meaning of Option 2, and an RRC config indication (full config.) included in an SgNB Modification Request Acknowledge and SgNB Modification Required is interpreted as having the meaning of Option 1 above.

By means of such operation examples, Issues 1 and 2 described above can be solved, and an appropriate RRC configuration can be achieved according to changes in the SN.

### (3.3) Operation Example 2

In the above-described Intra-CU inter DU SCG change/Intra-SN PSCell change, the full config. configuration of the RRC configuration of the SN (NR SCG config + SCG radio bearer config) can be notified to the MN by means of a combination of an RRC config indication and a PDCP change indication specified in the X2-AP (Application) protocol.

However, the operation content of the MN changes depending on the interpretation of the meaning of the RRC config indication described in Operation Example 1.

Therefore, the MN may follow either Operation Example 2-1 or Operation Example 2-2 below with respect to releasing/adding regarding EN-DC (Endc-ReleaseAdd) according to the interpretation of the meaning of the RRC config indication.

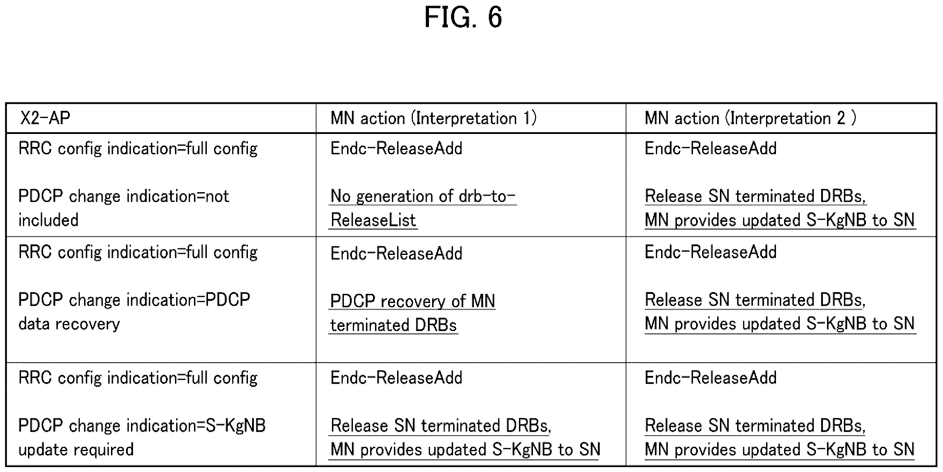

Fig. 6 shows an example of the content of the specific action of the MN in Operation Example 2.

- (Operation Example 2-1): As an interpretation of the meaning of an RRC config indication, if Operation Example 1-2 (meaning of Option 2) is followed, and if the MN receives from the SN an SgNB Modification Request Acknowledge or SgNB Modification Required that includes an RRC config indication (full config.), the MN may operate according to Interpretation 2 shown in Fig. 6.

As shown in Fig. 6, in Interpretation 2, the MN may release the DRB terminated to the SN and provide updated security information (specifically, a security key (S-KgNB)) to the SN regardless of the content of the PDCP change indication.

- (Operation Example 2-2): As an interpretation of the meaning of an RRC config indication, if Operation Example 1-3 (meaning of Option 1 or Option 2 according to the type of inter-node message) is followed, and if the MN receives from the SN an SgNB Modification Request Acknowledge or SgNB Modification Required that includes RRC config indication (full config.), the MN may operate according to Interpretation 1 shown in Fig. 6.

As shown in Fig. 6, in Interpretation 1, the MN may perform non-generation of the radio bearer's release list (no generation of drb-to-ReleaseList), PDCP data recovery, or a security key (S-KgNB) update depending on the content of the PDCP change indication.

### (3.3) Example of specification change

In order to specify Operation Example 1 described above (specifically, Operation Example 1-3), in the 3GPP specification, it may be specified as follows, for example.

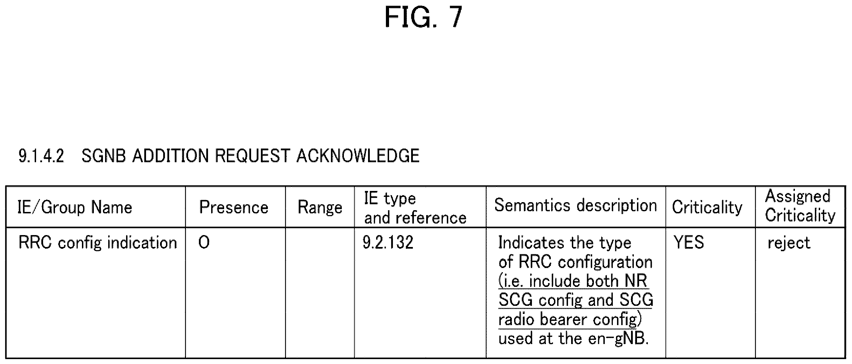

Fig. 7 shows an example of the specification of the SgNB Addition Request Acknowledge. Specifically, Fig. 7 shows an example of the specification of the SgNB Addition Request Acknowledge specified in 3GPP TS36.423, chapter 9.1.4.2. As shown in Fig. 7, it may be specified that the RRC config indication is the RRC configuration of both the SCG config and radio bearer config (Option 2 described above).

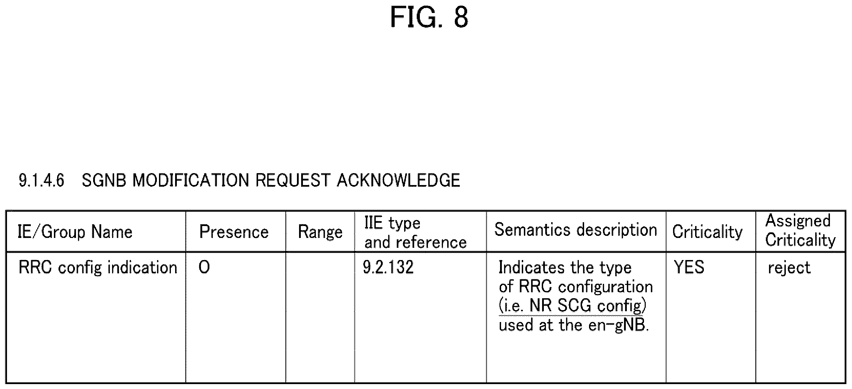

Fig. 8 shows an example of the specification of the SgNB Modification Request Acknowledge. Specifically, Fig. 8 shows an example of the specification of the SgNB Modification Request Acknowledge specified in 3GPP TS36.423, chapter 9.1.4.6. As shown in Fig. 8, it may be specified that the RRC config indication is the RRC configuration of the SCG config (Option 1 described above).

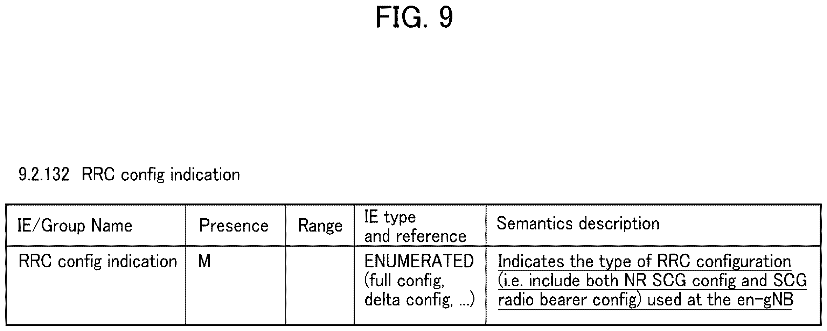

Fig. 9 shows an example of the specification of the RRC config indication. Specifically, Fig. 9 shows an example of the specification of the RRC config indication specified in 3GPP TS36.423, chapter 9.1.4.132. As shown in Fig. 9, it may be specified that the RRC config indication means both the SCG config and SCG radio bearer config (Option 2).

Note that the contents shown in Figs. 7 to 9 are examples of specifications, and different expressions may be used if there is content specifying a similar operation.

### (4) Action and effect

According to the above embodiment, the following action and effect can be obtained. Specifically, according to the radio communication system 10 (eNB 100A (MN)), it is possible to correctly recognize the meaning of the RRC config indication (full config.) according to the type of inter-node message including the RRC config indication, and therefore it is possible to realize an appropriate configuration of the RRC with respect to the SCG (SN). In addition, this can prevent a failure during modification of the SN (gNB) (SgNB modification failure) in advance.

In particular, in the present embodiment, an interpretation of the meaning of an RRC config indication (full config.) can be changed depending on the type of inter-node message (SgNB Addition Request Acknowledge, SgNB Modification Required, or SgNB Modification Request Acknowledge), and therefore it is possible to realize an appropriate configuration of a more appropriate RRC according to the specific operation with respect to the SgNB.

Further, in the present embodiment, the eNB 100A (MN) can realize an appropriate operation such as the release of a bearer terminated to an SN based on the type of inter-node message including the RRC config indication (full config.), and therefore the reliability of dual connectivity such as EN-DC can be enhanced.

### (5) Other embodiments

Although the embodiment has been described above, it is obvious to those skilled in the art that the present invention is not limited to the description of the embodiment and that various modifications and improvements thereof are possible.

For example, in the above described embodiment, EN-DC in which the MN is an eNB and the SN is a gNB has been described as an example, but as described above, another DC may be used. Specifically, the following may be used: NR-DC in which the MN is a gNB and the SN is a gNB, or NE-DC in which the MN is a gNB and the SN is an eNB.

Further, in the above description, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (Figs. 2, 3) used in the description of the above-described embodiment shows blocks in units of functions. Those functional blocks (components) can be realized by a desired combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work is called a transmitting unit or a transmitter. For any of the above, as described above, the realization method is not particularly limited.

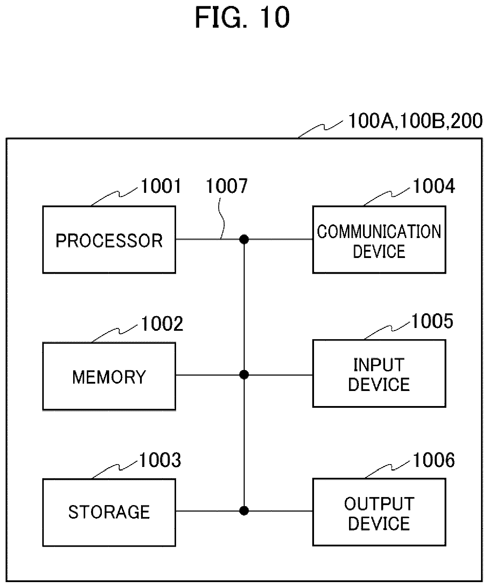

Further, the above-described eNB 100A, gNB 100B, and UE 200 (the device) may function as a computer that performs processing of a radio communication method of the present disclosure. FIG. 10 is a diagram showing an example of a hardware configuration of the device. As shown in FIG. 10, the device may be configured as a computer device including a processor 1001, a memory 1002, a storage 1003, a communication device 1004, an input device 1005, an output device 1006, a bus 1007, and the like.

Furthermore, in the following description, the term "device" can be substituted with circuit, device, unit, or the like. The hardware configuration of the device may include one or more devices shown in the figure or may not include some of the devices.

Each of the functional blocks of the device (see Figs. 2, 3) is implemented by means of any of hardware elements of the computer device or a combination of the hardware elements.

In addition, each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above can be executed by one processor 1001 or can be executed simultaneously or sequentially by two or more processors 1001. The processor 1001 can be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 can be referred to as an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure can be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present invention may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or a desired combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be substituted with a mobile station (user terminal, hereinafter the same). For example, each aspect/embodiment of the present disclosure may be applied to a configuration in which communication between a base station and a mobile station is replaced with communication between a plurality of mobile stations (for example, this may be called Device-to-Device (D2D), Vehicle-to-Everything (V2X), or the like). In this case, the mobile station may have the function of a base station. In addition, words such as "uplink" and "downlink" may also be substituted with words corresponding to inter-terminal communication (for example, "side"). For example, an uplink channel, a downlink channel, or the like may be substituted with a side channel.

Similarly, the mobile station in the present disclosure may be read as a base station. In this case, the base station may have the function of the mobile station. A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as a TTI having a time length exceeding 1 ms, and a short TTI (for example, shortened TTI) may be read as a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a sub-carrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be set in one carrier for the UE.

At least one of the configured BWPs may be active, and the UE does not have to expect to transmit and receive predetermined signals/channels outside the active BWP. Note that "cell", "carrier", and the like in this disclosure may be read as "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be substituted with "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 radio communication system
20 E-UTRAN
30 NG RAN
100A eNB
100B gNB
110 radio communication unit
120 RRC processing unit
130 DC processing unit
140 control unit
200 UE
210 radio communication unit
220 RRC processing unit
230 DC processing unit
240 control unit
1001 processor
1002 memory
1003 storage
1004 communication device
1005 input device
1006 output device
1007 bus

## Claims

1. A radio base station comprising:
a receiving unit that receives a configuration indication of a radio resource control layer; and
a control unit that assumes that the configuration indication is a configuration indication in a radio resource control layer of a secondary cell group if the configuration indication is included in a specific inter-node message.

2. A radio base station comprising:
a receiving unit that receives a configuration indication of a radio resource control layer; and
a control unit that assumes that the configuration indication is a configuration indication in a radio resource control layer of a secondary cell group and a radio bearer if the configuration indication is included in a specific inter-node message.

3. A radio base station comprising:
a receiving unit that receives a configuration indication of a radio resource control layer; and
a control unit that assumes that the configuration indication is a configuration indication in a radio resource control layer of a secondary cell group and a radio bearer if the configuration indication is included in a first inter-node message, and assumes that the configuration indication is a configuration indication in a radio resource control layer of a secondary cell group if the configuration indication is included in a second inter-node message.

4. The radio base station according to any one of claims 1 to 3, wherein
the inter-node message is a message related to a request to add or change a secondary node.

5. The radio base station according to claim 2, wherein the control unit releases a radio bearer terminated to a secondary node and provides security information to the secondary node, based on a type of the inter-node message including the configuration indication.

6. The radio base station according to claim 3, wherein the control unit performs non-generation of a release list of a radio bearer or recovery of a packet data convergence protocol layer of a radio bearer terminated to the radio base station, based on a type of the inter-node message including the configuration indication.
